(19) **Europäisches Patentamt**

**European Patent Office**

**Office européen des brevets**

(11) **EP 1 036 679 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(51) Int Cl.$^7$: **B60G 21/05**

(21) Anmeldenummer: **00104251.4**

(22) Anmeldetag: **02.03.2000**

(54) **Verbundlenkerhinterachse**

Twist-beam rear axle

Essieu arrière à traverse déformable en torsion

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **13.03.1999 DE 19911282**

(43) Veröffentlichungstag der Anmeldung:
**20.09.2000 Patentblatt 2000/38**

(73) Patentinhaber: **ThyssenKrupp Automotive AG**
**44793 Bochum (DE)**

(72) Erfinder:
- **Etzold, Dieter, Dipl.-Ing.**
  **33813 Oerlinghausen (DE)**
- **Harbig, Peter, Dipl.-Ing.**
  **33824 Werther (DE)**
- **Schmitt, Michael**
  **MK 406 QU Bedford (GB)**
- **Runte, Klaus**
  **33615 Bielefeld (DE)**
- **Jentsch, Kai Uwe, Dipl.-Ing.**
  **47447 Moers (DE)**
- **Laukamp, Sven, Dipl.-Ing.**
  **33649 Bielefeld (DE)**

(56) Entgegenhaltungen:
| | |
|---|---|
| EP-A- 0 229 576 | EP-A- 0 552 537 |
| EP-A- 0 681 932 | DE-C- 19 653 959 |
| US-A- 2 069 911 | US-A- 4 599 843 |
| US-A- 5 507 518 | US-A- 5 518 265 |

**Beschreibung**

Die Erfindung bezieht sich auf eine Verbundlenkerhinterachse gemäß Oberbegriff des Anspruches 1.

Aus der EP 0 752 332 A1 und der DE 196 53 959 C1 sind Verbundlenkerhinterachsen bekannt, die einen an den Enden kreisrunden rohrförmigen, im mittleren Längenbereich durch spanlose Umformung jedoch doppelwandigen U-förmigen Querträger aufweisen. Die Abschnitte zwischen den kreisrunden Enden und den mittleren U-förmigen Längenbereichen gehen dabei kontinuierlich vom kreisrunden zum U-förmigen Querschnitt über. Der Querträger ist aus einem ursprünglich insgesamt kreisrunden Rohr durch spanlose Umformung in mehreren Einzelschritten hergestellt. Sowohl das Rohr als Ausgangsprodukt als auch dessen Umformung zu dem Querträger ist relativ aufwendig, weil sich der Querschnitt in Längsrichtung des Querträgers stark ändert.

Aus der EP 0 229 576 A1 ist eine Verbundlenkerhinterachse ersichtlich, wobei Längslenker und Querträger insgesamt aus einem Rohr ebenfalls durch spanloses Umformen hergestellt werden. Auch hierbei sind eine Vielzahl von komplizierten Umformvorgängen erforderlich, da zusätzlich die Längslenker geformt werden müssen.

In der EP 0 552 537 A1 ist eine Verbundlenkerhinterachse nach dem Doppelstabprinzip dargestellt, wobei der Querträger aus einem V-förmigen Blech mit an den freien Enden angeordneten Hohlkammern besteht. Zur Bildung der Hohlkammer sind die freien Enden durch Rollformen nach außen umgebogen und mit den Schenkeln verschweißt. Hierbei müssen also mindestens zwei Schweißnähte angefertigt werden, wobei auch die Schwierigkeit besteht, die beiden Hohlkammern genau gleich groß auszubilden.

Die US 5,507,518 A zeigt eine gattungsgemäße Verbundlenkerhinterachse. Diese Verbundlenkerhinterachse wird durch Schmieden in sechs Umformschritten hergestellt. Durch diese vielen nacheinander folgenden Umformschritte ist es nachteilig nicht möglich, hochfeste Werkstoffe einzusetzen, ohne dass die Zwischenschaltung einer Wärmebehandlung erfolgt, was nicht nur nachteilig hinsichtlich der Herstellungskosten ist, sondern darüber hinaus nachteilig einen negativen Einfluß auf die Materialeigenschaften bewirkt.

Der Erfindung liegt die Aufgabe zugrunde, eine Verbundlenkerhinterachse der beschriebenen Art vorzuschlagen, die aus einem preiswerten Ausgangsmaterial und durch einfache Umformvorgänge hergestellt werden kann.

Die Lösung der Erfindung ist im Anspruch 1 angegeben. Die Ansprüche 2 bis 11 enthalten sinnvolle Ausführungsformen dazu.

Erfindungsgemäß ist vorgesehen, daß der Querträger aus einem ebenen Blech, vorzugsweise einem Stahlband (Coil), durch Walzen hergestellt wird.

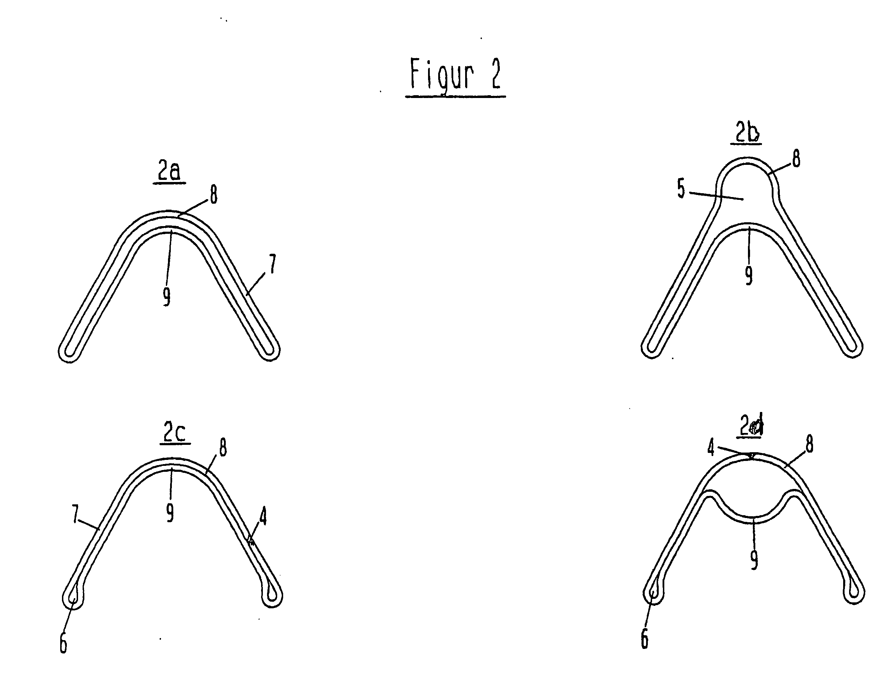

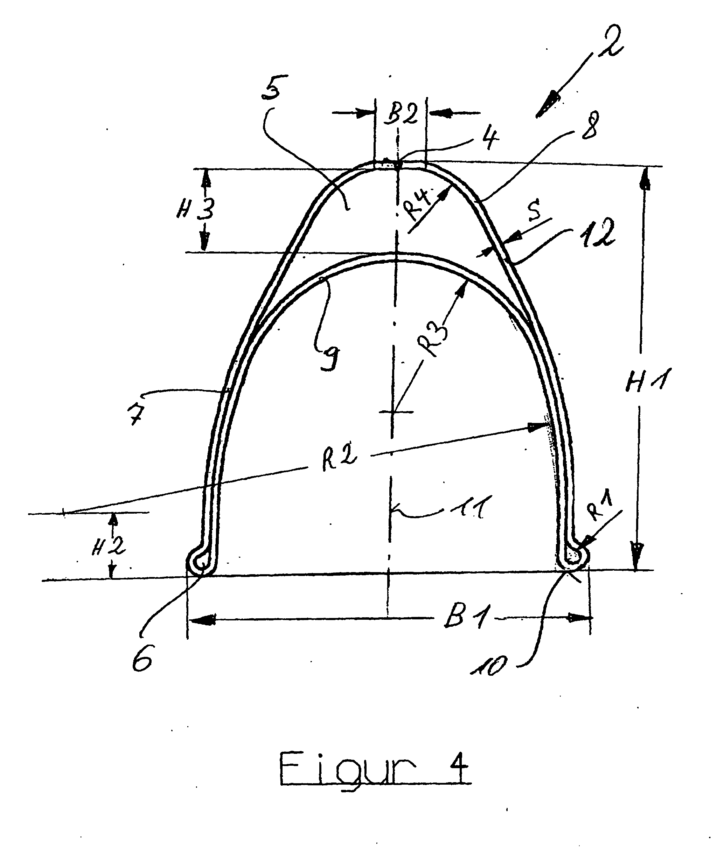

Dazu wird aus einem Coil ein Blech in der Weise gewalzt, daß ein Querschnitt, wie in den Figuren 2 und 4 dargestellt, erreicht wird. Die beiden Längskanten des Bleches werden nach dem Walzen und Abschneiden durch eine in Längsrichtung der Querstrebe verlaufende Schweißnaht verbunden. Damit wird auf einfache Weise ein doppelwandiges Torsionsprofil hergestellt, das genau an den erforderlichen Stellen beliebige Hohlkammern besitzt. Hierdurch wird mit möglichst geringem Materialeinsatz des Werkstoffes Stahl ein besonders leichtes, aber trotzdem torsionssteifes Profil erreicht. Neben der Gewichts- und Kosteneinsparung ist insbesondere in Hinblick auf die gewünschte Lage des Schubmittelpunktes ein variabler Querschnitt der Querstrebe zu erreichen. Außerdem können insbesondere auch hochfeste Werkstoffe angewandt werden.

Je nach Ausführungsform kann die Schweißnaht zur Verbindung der beiden Längskanten des Bleches mittig, d. h. vorzugsweise in der Symmetrieachse, im oberen oder unteren bogenförmigen Steg angebracht werden. Es ist aber auch möglich, die Schweißnaht in der inneren oder äußeren Blechwand eines Schenkels des Profiles oder am freien Ende eines Schenkels anzubringen. Durch die erfindungsgemäße Konstruktion ist insbesondere auch ein reproduzierbar genaues Profil der Querstrebe herstellbar.

Die Erfindung wird anhand der beigefügten Figuren 1 bis 3 beispielsweise näher erläutert. Es zeigen

Figur 1 eine Gesamtansicht einer Verbundlenkerhinterachse

Figur 2 Querschnitte von verschiedenen Profilformen (2 a bis 2 d) der Querstrebe 2 und

Figur 3 eine perspektivische Ansicht und einen vertikalen Querschnitt durch eine Querstrebe 2 und

Figur 4 einen weiteren Querschnitt der Querstrebe 2.

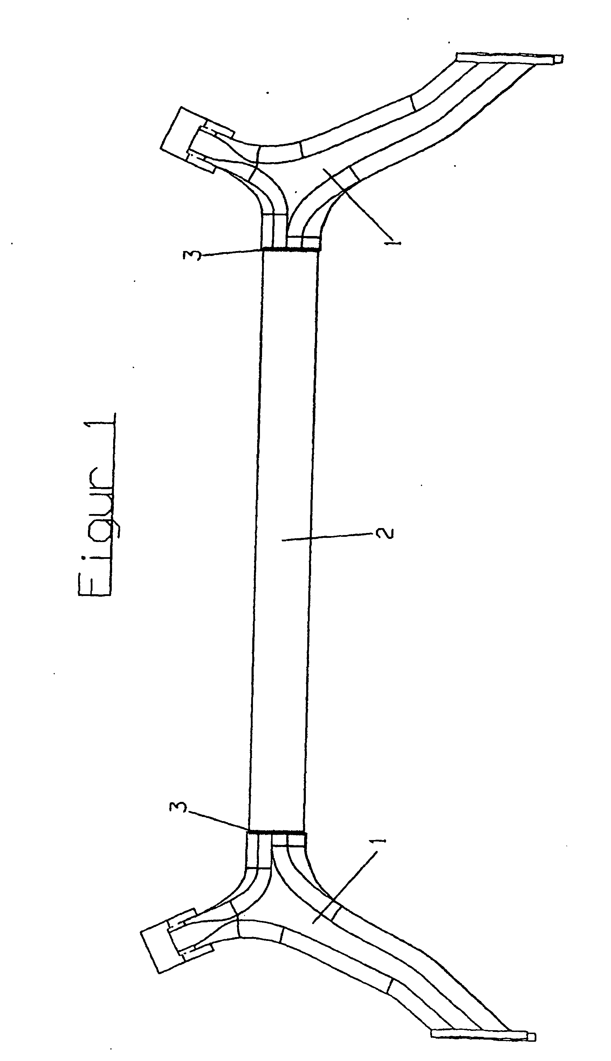

In der Figur 1 ist nur schematisch die grundsätzliche Konstruktion einer Ver bundlenkerhinterachse für Kraftfahrzeuge dargestellt. Zwischen den beiden Längslenkern 1 ist dabei die Querstrebe 2 angeordnet, die über ihrer gesamten Länge einen gleichbleibenden Querschnitt besitzt und an den Enden über eine Schweißnaht 3 mit den Längslenkern 1 verbunden ist.

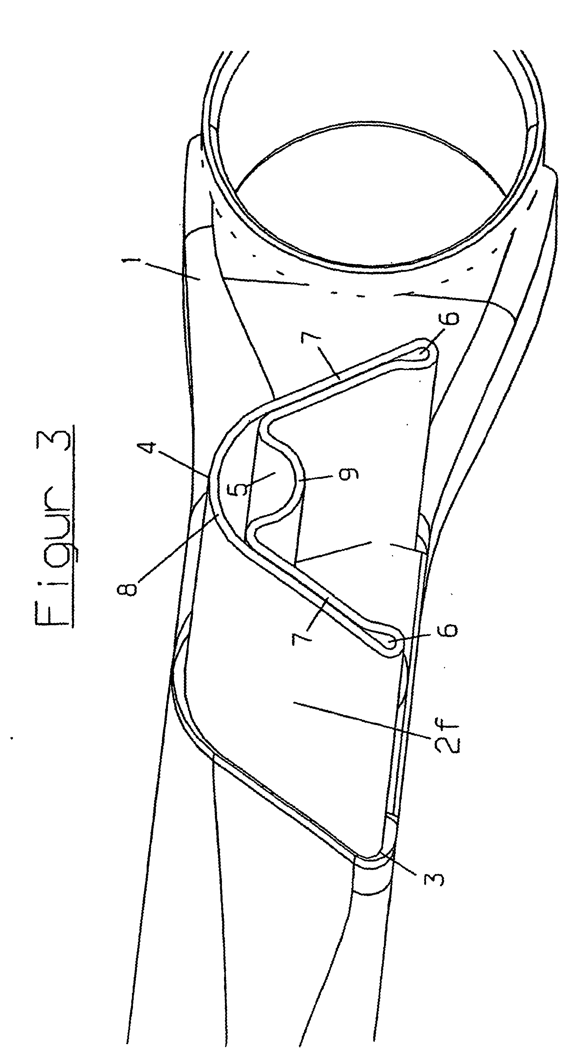

In Figur 3 ist als Ausschnitt und perspektivisch die Befestigung einer Querstrebe 2 mit dem Querschnitt 2 d an einem Längslenker 1 mit Hilfe der Schweißnähte 3 dargestellt. Diese Querstrebe 2 ist wie die anderen Querstreben im wesentlichen V-förmig ausgebildet und besitzt eine basisseitige Hohlkammer 5, die im wesentlichen von den oberen und unteren bogenförmigen Stegen 8, 9 gebildet wird. Im Bereich der Schenkel 7 des V-förmigen Profiles liegen die beiden Blechwände aufeinander. An den freien Enden der Schenkel 7 sind jeweils Hohlkammern 6 gebildet, deren Größe von der vorgesehenen Beanspruchung der als Torsionsprofil beanspruchten Querstrebe 2 abhängt.

In Figur 2 sind verschiedene nach dem gleichen Verfahren herzustellende, geschlossene Profile dargestellt. Bei der Profilform 2 a ist der Abstand zwischen den beiden Blechwänden über den gesamten Profilquerschnitt gleich groß. Bei der Profilform 2 c liegen die Blechwände, abgesehen von den Hohlkammern 6 am freien Ende der Schenkel 7, immer aufeinander. Bei der Profilform 2 b ist zur Verlagerung des Schubmittelpunktes eine basisseitige Hohlkammer 5 ausgebildet.

Die vorzugsweise in Längsrichtung der Querstreben 2 verlaufende Schweißnaht 4 ist in den Figuren an verschiedenen Stellen des Profiles dargestellt. Bei der Profilform 2 d befindet sie sich im oberen Scheitelpunkt des Steges 8 in der Symmetrieebene. Sie kann aber auch, wie bei der Profilform 2 c dargestellt, in der äußeren Blechwand eines Schenkels 7 angeordnet sein.

Figur 4 zeigt eine für den Einsatz bei PKW's optimierte Querstrebe 2. Diese Querstrebe 2 weist vorteilhaft eine für diesen Einsatzfall hohe Biegesteifigkeit und Torsionsweichheit, auch Rollsteifigkeit genannt, bei geringem Eigengewicht auf. Das Profil stellt eine Kombination der Profilformen 2b, 2c und 2d dar. Die Innenkontur des unteren bogenförmigen Steges 9 und des doppelwandigen Schenkels 7 ist etwa parabelförmig ausgebildet. Die am offenen Ende 10 angeordneten Hohlkammern 6 sind nach außen gerichtet, und zwischen dem oberen bogenförmigen Steg 8 und dem unteren bogenförmigen Steg 9 ist eine Hohlkammer 5 mit einer Hohlkammerhöhe H3 angeordnet. Der obere bogenförmige Steg 8 weist einen im Wesentlichen zentralen Kreisbogen R4 auf, der über Verbindungstangenten 12 an den äußeren der doppelwandigen Schenkel 7 angebunden ist. Die Gesamthöhe H1 entspricht etwa der Gesamtbreite H2.

Das Profil entsprechend Figur 4 weist im Detail die nachfolgend beschriebene Form mit den ebenfalls im Detail beschriebenen Maßen auf. Das Verhältnis von Gesamthöhe H1 zu Gesamtbreite B2 liegt im Bereich von 0,85 bis 1,15. Die Innenkontur von bogenförmigem Steg 9 und doppelwandigem Schenkel 7 ist derartig ausgebildet, dass die am offenen Ende 10 angeordneten Hohlkammern 6 nach außen gerichtet sind. Diese Hohlkammern 6 weisen einen sich über etwa 210° erstreckenden kreisförmigen Querschnitt mit einem Radius R1 entsprechend der Wanddicke S des Profils auf. Dieser Querschnitt läuft über einen entsprechenden Gegenradius jeweils zum doppelwandigen Schenkel 7 aus.

Die Innenkontur verläuft vom offenen Ende 10 über eine geringe Höhe H2 etwa mit gleichbleibender Weite. An diese geringe Höhe H2 schließt sich ein zur Mitte 11 gerichteter Radius R2 an, der eine Größe entsprechend dem 1,1 bis 1,5-fachen der Gesamtbreite B1 aufweist. Die Innenkontur wird am unteren bogenförmigen Steg 9 mit einem Radius R3 abgeschlossen, der eine Größe entsprechend dem 0,3 bis 0,45-fachen der Gesamtbreite B1 aufweist. Die Radien R2 und R3 sind so abgestimmt, dass sie am Übergangspunkt ohne Versatz und ohne lineare Tangentenverbindung ineinander übergehen.

Die in Längsrichtung der Querstrebe 2 verlaufende Schweißnaht 4 zum Verbinden der beiden Längskanten des Bleches ist auf der Symmetrieachse (Mitte 11) am oberen bogenförmigen Steg 8 angeordnet. Zur Vereinfachung und Verbesserung des Schweißvorganges weist der obere bogenförmige Steg 8 einen schmalen, sich horizontal beidseitig neben der Schweißnaht 4 erstreckenden Steg B2 auf. Dieser Steg B2 geht seitlich jeweils in Kreisbögen R4 über, welche über Verbindungstangenten 12 jeweils an den äußeren der doppelwandigen Schenkel 7 angebunden sind.

Die Hohlkammerhöhe H3 errechnet sich aus der Gesamthöhe H1 dividiert durch die Dicke S zum Kubik und weiterhin dividiert durch eine Konstante von 0,6 bis 2,5 nach der Formel

$$H3 = \frac{H1}{S^3 \, (0,6 \text{ bis } 2,5)}.$$

Die Ausbildung einer Querstrebe, insbesondere mit den Merkmalen nach den Patentansprüchen 5 bis 11, wie sie in Fig. 4 beschrieben ist, bietet wesentliche wirtschaftliche Vorteile. Bei gleichen Fahrzeugtypen mit unterschiedlicher Motorisierung und/oder unterschiedlicher Anforderung an die Rollsteifigkeit gestattet diese Ausbildung eine wesentlich vereinfachte Herstellung der gesamten Verbundlenkerhinterachse. Für diese Einsatzfälle, also für den Einsatz von Verbundlenkerhinterachsen für gleiche Fahrzeugtypen mit unterschiedlicher Motorisierung und unterschiedlicher Anforderung an die Rollsteifigkeit, können alle wesentlichen Teile der Verbundlenkerhinterachse gleich bleiben. Sowohl die Längslenker 1 als auch die Aufhängung der Querstrebe 2 und ihre Anbringung an das Chassis sowie die Bauteile der Radaufhängung bleiben gleich. Auch die Außenform und die Außenmaße der Querstrebe 2 bleiben gleich. Zur an die Anforderungen des Fahrzeuges erforderlichen Anpassung der Rollsteifigkeit (der Torsionsfestigkeit) wird lediglich die Hohlkammerhöhe H3 verändert. Diese Hohlkammerhöhe H3 bestimmt ursächlich die Rollsteifigkeit bzw. den Torsionswiderstand. Die Biegesteifigkeit der Querstrebe 2 wird durch die Änderung der Hohlkammerhöhe H3 nur derartig gering beeinflusst, dass diese Veränderung vernachlässigbar ist.

**Bezugszeichenliste**

| (1) | Längslenker |
|---|---|
| (2) | Querstrebe |
| (2 a bis 2 f) | Profilform |
| (3) | Schweißnaht |

| | |
|---|---|
| (4) | Schweißnaht |
| (5) | Hohlkammer |
| (6) | Hohlkammer |
| (7) | doppelwandiger Schenkel |
| (8) | oberer bogenförmiger Steg |
| (9) | unterer bogenförmiger Steg |
| (10) | Ende |
| (11) | Mitte |
| (12) | Verbindungstangente |
| (B1) | Gesamtbreite |
| (B2) | Steg |
| (H1) | Gesamthöhe |
| (H2) | Höhe |
| (H3) | Hohlkammerhöhe |
| (R1) | Radius |
| (R2) | Radius |
| (R3) | Radius |
| (R4) | Kreisbogen |

**Patentansprüche**

1. Verbundlenkerhinterachse mit zwei Längslenkem (1) und einer zwischen den Längslenkern (1) angeordneten, durch spanloses Umformen hergestellten, doppelwandigen und im Querschnitt wesentlichen U- oder V-förmigen, als Torsionsprofil ausgebildeten Querstrebe (2) mit ein oder mehreren im Querschnitt der Querstrebe (2) angeordneten, sich längs erstreckenden Hohlkammem (5, 6), die aus einem ebenen oder im wesentlichen ebenen Blech herstellt ist, wobei die nach dem Umformen aneinander bzw. nahezu aneinander liegenden Längskanten des Bleches durch eine in Längsrichtung oder im wesentlichen in Längsrichtung der Querstrebe (2) verlaufende Schweißnaht (4) verbunden sind, **dadurch gekennzeichnet, daß** die Querstrebe (2) über ihrer gesamten Länge einen gleichbleibenden Querschnitt besitzt, durch Walzen umgeformt ist, die Hohlkammer oder die Hohlkammern (5, 6) an den freien Enden der Schenkel (7) und/ oder im Bereich zwischen den bogenförmigen Stegen (8, 9) des Querschnittes der Querstrebe (2) angeordnet ist oder sind und im Bereich der Schenkel (7) die beiden Blechwände zumindest über eine bestimmte Länge aneinanderliegen oder mit gleichbleibendem Abstand zueinander angeordnet sind.

2. Verbundlenkerhinterachse nach Anspruch 1, **dadurch gekennzeichnet, daß** die Schweißnaht (4) mittig im oberen oder unteren bogenförmigen Steg (8, 9) oder im Bereich des oberen oder unteren bogenförmigen Steges (8, 9) verläuft.

3. Verbundlenkerhinterachse nach Anspruch 1, **dadurch gekennzeichnet, daß** die Schweißnaht (4) in der äußeren oder inneren Blechwand eines Schenkels (7) oder am freien Ende (10) eines Schenkels (7) verläuft.

4. Verbundlenkerhinterachse nach einem oder mehreren der Ansprüche 1 bis 3, **dadurch gekennzeichnet, daß** die Gesamthöhe (H1) 0,85 bis 1,15 der Gesamtbreite (B1) entspricht.

5. Verbundlenkerhinterachse nach einem oder mehreren der Ansprüche 1 und 4, **dadurch gekennzeichnet, daß** die Innenkontur des unteren bogenförmigen Steges (9) und des doppelwandigen Schenkels (7) etwa parabelförmig ausgebildet ist.

6. Verbundlenkerhinterachse nach einem oder mehreren der Ansprüche 1 und 4, **dadurch gekennzeichnet, daß** sich die Innenkontur vom offenen Ende (10) aus etwa mit gleich bleibender Weite über eine geringe Höhe (H2) nach innen erstreckt und sich ein zur Mitte (11) gerichteter Radius (R2) von 1,1 bis 1,5 x B1 anschließt, der in einen im Wesentlichen den unteren bogenförmigen Steg (9) bildenden Radius (R3) mit einem Maß von 0,3 bis 0,45 x B1 ausläuft.

7. Verbundlenkerhinterachse nach einem oder mehreren der Ansprüche 1, 4, 5 und 6, **dadurch gekennzeichnet, daß** zwischen dem oberen bogenförmigen Steg (8) und dem unteren bogenförmigen Steg (9) eine Hohlkammer (5) mit einer Hohlkammerhöhe (H3) angeordnet ist und der obere bogenfömnige Steg (8) einen zentralen Kreisbogen (R4) aufweist, der über Verbindungstangenten (12) an den äußeren der doppelwandigen Schenkel (7) angebunden ist.

8. Verbundlenkerhinterachse nach Anspruch 7, **dadurch gekennzeichnet, daß** der obere bogenförmige Steg (8) einen zentralen linearen Steg (B2) aufweist, an den sich beidseitig ein Kreisbogen (R4) anschließt.

9. Verbundlenkerhinterachse nach einem oder mehreren der Ansprüche 1 und 4 bis 7, **dadurch gekennzeichnet, daß** am offenen Ende (10) nach außen gerichtete Hohlkammem (6) angeordnet sind.

10. Verbundlenkerhinterachse nach Anspruch 9, **dadurch gekennzeichnet, daß** die endseitigen Hohlkammern (6) einen sich über etwa 210° erstreckenden kreisförmigen Querschnitt mit einem Radius (R1), entsprechend der Wanddicke (S) des Profils, aufweisen.

11. Verbundlenkerhinterachse nach einem oder mehreren der Ansprüche 1 und 4 bis 10, **dadurch gekennzeichnet, daß** das Maß der Hohlkammerhöhe (H3) sich errechnet aus der Gesamthöhe (H1), dividiert durch die Dicke (S) zum Kubik und weiterhin dividiert durch eine Konstante von 0,6 bis 2,5.

**Claims**

1. Compound guide rod rear axle having two longitudinal guide rods (1) and a cross strut (2) which is disposed between the longitudinal guide rods (1), is produced by a non-cutting shaping method, is formed so as to be double-walled and have a substantially U or V shaped cross-section, is formed as a torsional profile and has one or several longitudinally extending hollow chambers (5, 6) which are disposed in the cross-section of the cross strut (2) which is produced from a planar or a substantially planar metal sheet, wherein the longitudinal edges of the metal sheet which are adjacent or approximately adjacent after the shaping process are connected by a welding seam (4) extending in the longitudinal direction or substantially in the longitudinal direction of the cross strut (2), **characterised in that** the cross-section of the cross strut (2) remains constant over the entire length of the cross strut, the cross strut is shaped by a rolling process, the hollow chamber(s) (5, 6) is/are disposed at the free end of the limbs (7) and/or in the region between the arcuate webs (8, 9) of the cross-section of the cross strut, and in the region of the limbs (7) the two metal sheet walls are disposed so as to be adjacent to each other or with a constant spacing between each other at least over a specific length.

2. Compound guide rod rear axle as claimed in Claim 1, **characterised in that** the welding seam (4) extends centrally in the upper or lower arcuate web (8, 9) or in the region of the upper or lower arcuate web (8, 9).

3. Compound guide rod rear axle as claimed in Claim 1, **characterised in that** the welding seam (4) extends in the outer or inner metal sheet wall of a limb (7) or on the free end (10) of a limb (7).

4. Compound guide rod rear axle as claimed in one or several of Claims 1 to 3, **characterised in that** the total height (H1) corresponds to 0.85 to 1.15 of the total width (B1).

5. Compound guide rod rear axle as claimed in one or several of Claims 1 and 4, **characterised in that** the inner outline of the lower arcuate web (9) and of the double-walled limb (7) is formed in an approximately parabolic shape.

6. Compound guide rod rear axle as claimed in one or several of Claims 1 and 4, **characterised in that** the inner outline extends, from the open end (10), inwardly having an approximately constant width over a small height (H2) and is followed by a radius (R2) of 1.1 to 1.5 x B1 which is directed towards the middle (11) and changes into a radius (R3) measuring 0.3 to 0.45 x B1 substantially forming the lower arcuate web (9).

7. Compound guide rod rear axle as claimed in one or several of Claims 1, 4, 5 and 6, **characterised in that** a hollow chamber (5) having a hollow chamber height (H3) is disposed between the upper arcuate web (8) and the lower arcuate web (9) and the upper arcuate web (8) comprises a central circular arc (R4) which is connected to the outer wall of the double-walled limb (7) via connecting rods (12).

8. Compound guide rod rear axle as claimed in Claim 7, **characterised in that** the upper arcuate web (8) comprises a central linear web (B2) which is followed on both sides by a circular arc (R4).

9. Compound guide rod rear axle as claimed in one or several of Claims 1 and 4 to 7, **characterised in that** outwardly directed hollow chambers (6) are disposed on the open end (10).

10. Compound guide rod rear axle as claimed in Claim 9, **characterised in that** the end-side hollow chambers (6) comprise a circular cross-section extending over approximately 210° and having a radius (R1) corresponding to the wall thickness (S) of the profile.

11. Compound guide rod rear axle as claimed in one or several of Claims 1 and 4 to 10, **characterised in that** the height (H3) of the hollow chamber is calculated from the total height (H1) divided by the thickness (S) cubed and then divided by a constant of 0.6 to 2.5.

**Revendications**

1. Essieu arrière à bras intégrés, avec deux bras oscillants longitudinaux (1) et une entretoise (2) disposée entre les bras oscillants longitudinaux (1), fabriqué par façonnage sans enlèvement de matière, à double paroi, de section transversale essentiellement configurée en U ou en V, configurée comme profilé de torsion, avec une ou plusieurs chambres creuses (5, 6) disposées dans la section transversale de l'entretoise (2), qui s'étendent longitudinalement et qui sont fabriquées en tôle plane ou essentiellement plane, les bords longitudinaux de la tôle qui sont situés l'un contre l'autre ou pratiquement l'un contre l'autre après le façonnage étant reliés par un cordon de soudure (4) qui s'étend dans le sens de la longueur ou essentiellement dans le sens de la longueur de l'entretoise (2), **caractérisé**

**en ce que** l'entretoise (2) possède une section transversale constante sur toute sa longueur, est formée par laminage, la chambre creuse ou les chambres creuses (5, 6) sont disposées aux extrémités libres des ailes (7) et/ou dans la région située entre les âmes (8, 9) de forme courbe de la section transversale de l'entretoise (2), et les deux parois de tôle étant disposées dans la région de l'aile (7) de manière à être jointives au moins sur une certaine longueur ou à présenter un écartement mutuel constant.

2. Essieu arrière à bras intégrés selon la revendication 1, **caractérisé en ce que** le cordon de soudure (4) s'étend au centre de l'âme supérieure ou de l'âme inférieure (8, 9) de forme courbe, ou dans la région de l'âme supérieure ou de l'âme inférieure (8, 9) de forme courbe.

3. Essieu arrière à bras intégrés selon la revendication 1, **caractérisé en ce que** le cordon de soudure (4) s'étend dans la paroi extérieure ou la paroi intérieure en tôle d'une aile (7) ou à l'extrémité libre (10) d'une aile (7).

4. Essieu arrière à bras intégrés selon l'une ou plusieurs des revendications 1 à 3, **caractérisé en ce que** la hauteur totale (H1) représente de 0,85 à 1,15 fois la largeur totale (B1).

5. Essieu arrière à bras intégrés selon l'une ou plusieurs des revendications 1 et 4, **caractérisé en ce que** le contour intérieur de l'âme inférieure (9) de forme courbe et celui de l'aile (7) à paroi double sont configurés sensiblement en paraboles.

6. Essieu arrière à bras intégrés selon l'une ou plusieurs des revendications 1 et 4 **caractérisé en ce que**, partant de l'extrémité ouverte (10) et sur une faible hauteur (H2), le contour intérieur s'étend vers l'intérieur avec une largeur sensiblement constante, et un rayon (R2) qui représente de 1,1 à 1,5 fois B1, dirigé vers le milieu (11) et qui se prolonge en un rayon (R3) d'une dimension de 0,3 à 0,45 fois B1 en formant essentiellement l'âme inférieure (9) de forme courbe, s'y raccorde.

7. Essieu arrière à bras intégrés selon l'une ou plusieurs des revendications 1, 4, 5 et 6, **caractérisé en ce qu'**entre l'âme supérieure (8) de forme courbe et l'âme inférieure (9) de forme courbe est disposée une chambre creuse (5) d'une hauteur (H3), l'âme supérieure (8) de forme courbe présentant un arc de cercle central (R4) qui se raccorde aux ailes extérieures (7) à double paroi par des tangentes de liaison (12).

8. Essieu arrière à bras intégrés selon la revendication 7, **caractérisé en ce que** l'âme supérieure (8) de forme courbe présente une âme centrale rectiligne (B2) de part et d'autre de laquelle se raccorde un arc de cercle (R4).

9. Essieu arrière à bras intégrés selon l'une ou plusieurs des revendications 1 et 4 à 7, **caractérisé en ce que** des chambres creuses (6) orientées vers l'extérieur sont disposées à l'extrémité ouverte (10).

10. Essieu arrière à bras intégrés selon la revendication 9, **caractérisé en ce que** les chambres creuses (6) situées aux extrémités présentent une section transversale circulaire de rayon (R1) qui est approprié à l'épaisseur (S) de la paroi du profilé et qui s'étend sur environ 210°.

11. Essieu arrière à bras intégrés selon l'une ou plusieurs des revendications 1 et 4 à 10, **caractérisé en ce que** la valeur de la hauteur (H3) des chambres creuses est calculée en divisant la hauteur totale (H1) par l'épaisseur (S) au cube, et en la divisant encore par une constante comprise entre 0,6 et 2,5.

Figur 1

Figur 2

# Figur 3

EP 1 036 679 B1

Figur 4